Europäisches Patentamt

European Patent Office

Office européen des brevets

(19)

(11) EP 0 601 925 B1

(12) **FASCICULE DE BREVET EUROPEEN**

(45) Date de publication et mention
de la délivrance du brevet:
**28.01.1998 Bulletin 1998/05**

(51) Int Cl.⁶: **G02B 27/00**

(21) Numéro de dépôt: **93402952.1**

(22) Date de dépôt: **07.12.1993**

(54) **Dispositif de visualisation tête haute avec contrôle de position de l'image**

Head-up Anzeige mit örtlicher Bestimmung des Bildes

Head-up visualization device with image position control

(84) Etats contractants désignés:
**BE DE FR GB**

(30) Priorité: **08.12.1992 FR 9214767**

(43) Date de publication de la demande:
**15.06.1994 Bulletin 1994/24**

(73) Titulaire: **SEXTANT AVIONIQUE**
**F-92360 Meudon-la-Forêt (FR)**

(72) Inventeurs:
• **Francois, Jean-Michel, Thomson-CSF, SCPI**
**F-92402 Courbevoie Cédex (FR)**
• **Golia, Michel, Thomson-CSF, SCPI**
**F-92402 Courbevoie Cédex (FR)**

(74) Mandataire: **Benoit, Monique et al**
**THOMSON-CSF-S.C.P.I.,**
**13, Avenue du Président**
**Salvador Allende**
**94117 Arcueil Cédex (FR)**

(56) Documents cités:
**DE-A- 1 932 325**    **US-A- 4 439 755**
**US-A- 4 775 218**    **US-A- 4 847 603**

## Description

L'invention concerne les systèmes de visualisation tête haute. Ces systèmes de visualisation permettent de voir en simultanéité un paysage extérieur et une image symbolique collimatée.

L'invention est applicable chaque fois que la position de l'image symbolique doit avoir une position précise par rapport au paysage extérieur. Ce cas se rencontre chaque fois que l'image symbolique représente un élément de ce paysage, par exemple dans un avion, l'élément symbolique pourra être une piste d'atterrissage ou pour un avion militaire un symbole de désignation d'objectif.

De tels systèmes comportent en général des moyens de génération d'une image symbolique, un bloc optique de projection de cette image, et un combineur constitué d'une glace transparente recevant l'image projetée et la renvoyant vers l'oeil d'un observateur par exemple un pilote.

Ce souci de bon positionnement de l'image symbolique est connu dans l'art. Il n'apparaît pas cependant que la nécessité de ramener l'erreur à une valeur maximale à ne pas dépasser pour permettre un "vol à vue" par mauvaise visibilité ait été bien appréciée. Ainsi par exemple, des moyens de détection et de correction des erreurs dues à un mauvais positionnement du combineur ont été décrits dans le brevet US-A- 4,775,218.

Dans le dispositif décrit dans ce brevet une source lumineuse liée à la structure d'un engin porteur éclaire un miroir fixé au combineur lequel renvoie la lumière de la source vers un capteur de position linéaire. Le capteur et la source ainsi agencés permettent de détecter une mauvaise position angulaire du combineur autour d'un axe autour duquel le combineur est rabattable.

Des circuits de traitement du signal généré par le capteur permettent alors de déplacer verticalement l'image généré par un tube cathodique pour compenser l'erreur de position de l'image due à une mauvaise position du combineur.

Le dispositif décrit dans ce brevet présente trois inconvénients :

- il est complètement décorrélé des moyens de projection et ne contrôle pas la position relative du combineur avec le système de génération d'image ;
- le contrôle se fait uniquement dans un seul axe (site) ;
- le contrôle ne garantit pas la position absolue de la symbologie dans le champ par rapport à une consigne.

Ces trois points sont développés ci-après :

1) Le dispositif décrit dans ce brevet n'est pas un dispositif de contrôle de la position de l'image, c'est un dispositif de contrôle de la position du combineur par rapport à une position nominale. La source lumineuse et le détecteur sont positionnés par rapport à la structure du porteur et non par rapport au dispositif générant l'image.

2) Le contrôle se fait sur un seul axe et n'est destiné qu'à compenser un mauvais positionnement angulaire du combineur autour d'un axe de rotation contenu ou parallèle au plan du combineur.

3) Une bonne position du combineur ne garantit pas une bonne position absolue de l'image symbolique car l'erreur de position du combineur n'est qu'une source d'erreur parmi d'autres.

Le brevet allemand DE-A-1 932 325 décrit un système du même type destiné à corriger l'erreur de positionnement du combineur seul mais ne tenant pas compte des autres sources d'erreur dans la position absolue de l'image symbolique.

On connaît aussi par le brevet américain US-A-4 847 603 un dispositif de visualisation tête haute dans lequel on corrige la position de l'image sur un tube à rayons cathodiques en compensant les erreurs dues aux signaux de commande et aux dérives inhérentes au tube. Pour cela, on détecte le passage du faisceau du tube à rayons cathodiques en des points prédéterminés de l'écran à l'aide de fibres optiques convenablement disposées face à cet écran. Mais cette correction ne tient aucun compte des autres causes d'erreur dans le positionnement final de l'image symbolique face à l'observateur.

Le but de l'invention décrite ci-après est de contrôler et de garantir en permanence la précision de superposition du tracé de la symbologie présentée au pilote, avec le paysage extérieur.

Ce but est atteint par l'identification et la prise en compte de toutes les sources d'erreur sur la position de l'image symbolique.

Dans la suite de la description l'invention sera décrite en prenant un générateur d'image comportant un écran à tube cathodique. L'invention n'est pas limitée à cet exemple. Elle est applicable à tout écran sur lequel il est possible de générer au moins de façon intermittente en un point au moins une tache suffisamment brillante pour que le flux de lumière généré par cette tache après affaiblissement dans des moyens optiques soit supérieur au seuil de sensibilité d'un détecteur.

Les sources principales d'erreurs peuvent être décomposées en deux parties distinctes :

- erreurs électroniques dues aux dérives du tube ; déviateur, THT, décalage et gains de la chaîne de tracé, pouvant entraîner des écarts de positionnement du tracé par rapport à la consigne ;
- erreurs opto-mécaniques: dues au mauvais positionnement angulaire du combineur par rapport à l'optique relais, pouvant être engendrées par une usure mécanique lors des différentes mise en place du combineur.

Le dispositif selon l'invention permet de mesurer et compenser les deux types d'erreur :

- l'erreur globale, mesurée par un test de la chaîne complète du tracé ;
- l'erreur opto-mécanique, mesurée par un test de la position angulaire du combineur.

Les moyens permettant d'exécuter le test de la chaîne complète comprennent dans l'ordre où ils se présentent sur un chemin optique une tache lumineuse en un point de l'écran générateur d'image, un miroir de renvoi fixé au combineur, des moyens optiques de concentration du faisceau issus du miroir, un détecteur de position du faisceau issus des moyens optiques. Ces moyens comprennent également des moyens électroniques de traitement des signaux issus du détecteur.

Les moyens permettant d'exécuter le test de la position angulaire du combineur comprennent une source de lumière associée à des moyens optiques de collimation disposés physiquement sur les moyens optiques de génération d'image. Ces premiers moyens éclairent le combineur. Les moyens d'exécution de test comprennent également des moyens optiques de focalisation concentrant le faisceau issu du combineur vers un détecteur de position, et enfin des moyens de traitement du signal issus du détecteur.

Selon l'invention il est donc prévu un dispositif de visualisation tête haute tel que défini dans la revendication 1.

Le mode préféré de réalisation sera maintenant décrit en référence aux dessins annexés dans lesquels :

- la figure 1, est un schéma destiné à expliquer le fonctionnement optique du dispositif selon l'invention ;
- la figure 2, est un schéma destiné à montrer l'arrangement structurel du dispositif selon l'invention ;
- la figure 3, est un schéma des quadrants du capteur ;
- la figure 4, est un schéma du positionnement de la tache dans un coin d'un écran ;
- la figure 5, est un schéma des circuits électroniques de traitement ;
- les figures 6 (a, b, c, d, e) sont des schéma représentant le séquencement des signaux.

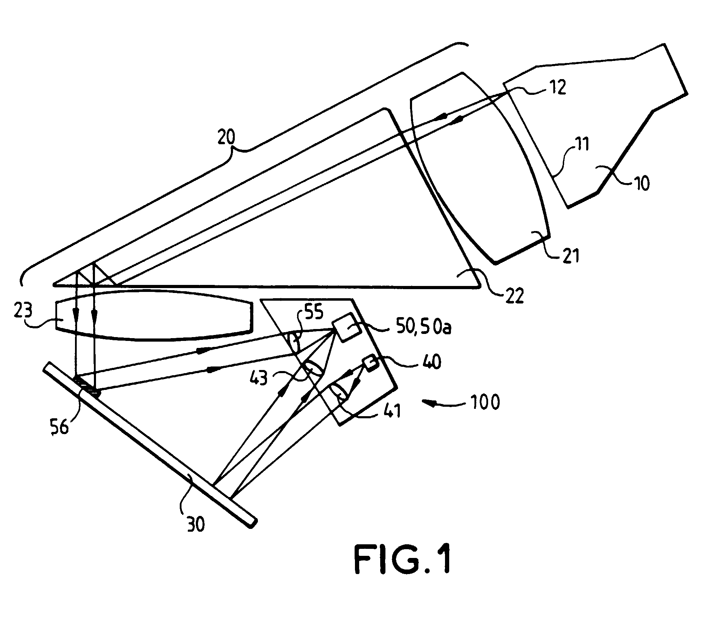

La figure 1 est un schéma destiné à illustrer le fonctionnement optique du dispositif selon l'invention.

Un tube générateur d'image 10 comportant un écran 11, projette une image vers un combineur 30 au travers d'un bloc optique de collimation 20. Le bloc 20 a été représenté formé de deux groupes de lentilles 21, 23 et d'un prisme 22.

Les éléments 10, 20, 30 sont connus dans l'art.

Une source lumineuse 40 constituée par une diode infrarouge émet une lumière qui, collimatée par une lentille L1 41 se réfléchit sur le combineur 30.

La lumière réfléchie est focalisée par une lentille L2 43 vers un détecteur quatre quadrants 50. La diode est allumée de façon intermittente. Dans des périodes où la diode n'est pas allumée, le détecteur 50 reçoit la lumière en provenance d'une tache lumineuse 12 de l'écran 11. Cette tache est elle aussi allumée de façon périodique seulement. La lumière émise par cette tache est collimatée par le bloc optique 20 vers un miroir 56 structurellement lié au combineur, par exemple fixé à un montant. Après réflexion sur le miroir 56 cette lumière focalisée par une lentille L3 55 atteint le capteur 50. Dans le mode préféré de réalisation ici décrit il n'y a qu'un seul détecteur et comme il sera vu plus loin qu'un seul circuit de traitement de signaux 60.

Il est évidemment possible de placer deux détecteurs 50 et 50a, les signaux issus de ces capteurs étant traités chacun dans des circuits dédiés (60).

Cette configuration n'a pas été représentée.

Sur la figure 1 les trajets des faisceaux optiques issus du point 12 et de la diode 40 sont représentés par des traits fléchés.

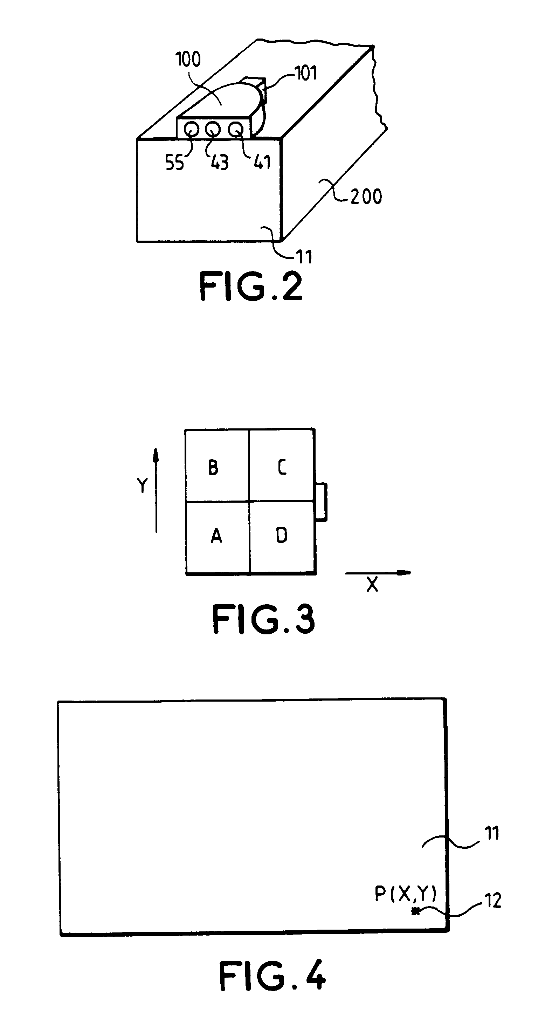

Dans un mode préféré de réalisation, la diode, les lentilles, le détecteur sont positionnés dans un ensemble module de détection 100 piété sur une structure 200 comme représenté figure 2. Cette structure porte le tube 10 et le bloc optique 20. Cette configuration est avantageuse car d'un point de vue fonctionnel elle permet de vérifier le bon positionnement de l'image symbolique elle-même et non pas comme dans l'art antérieur la position d'un élément entrant dans sa formation. Elle permet de plus une modification aisée des dispositifs de visualisation tête haute existants par addition d'un seul module contenant l'optique et des circuits de traitement des signaux créés par le détecteur quatre quadrants dont il sera parlé plus loin. Un boîtier de raccordement 101 placé à l'arrière du module permet par l'intermédiaire de câbles non représentés le raccordement à des circuits électriques du dispositif de visualisation tête haute, en particulier ceux qui commandent un déplacement latéral et vertical de l'image crée sur l'écran 11.

Avant d'aborder la description du fonctionnement du dispositif, quelques indications sont données ci-après sur les précautions à prendre et sur la nature des éléments employés.

Le détecteur quatre quadrants choisi pour l'application est constitué d'une zone sensible de forme carrée (3 mm de côté), cette surface active est séparée en quatre quadrants carrés. Référence détecteur : HAMAMATSU S4349.

Une vue arrière de la surface sensible est représentée figure 3.

Pour les quatre quadrants nommés A, B, C, D recevant un certain flux, les signaux de position X et Y d'une tâche lumineuse ont pour valeur

$$X = \frac{(C+D)-(A+B)}{(A+B+C+D)}$$

$$Y = \frac{(B+C) - (A+D)}{(A+B+C+D)}$$

Ces valeurs traduisent directement l'écart algébrique de la position de la tache par rapport à une position de référence supposée située au centre du détecteur.

Dans l'exemple de réalisation choisi la tache a un diamètre de 2 mm. Une erreur angulaire maximum doit donc se traduire au niveau du détecteur par un déplacement maximum de 0,5 mm pour que la tâche reste en entier sur le détecteur.

Les positions et le choix des lentilles $L_1$ $L_2$ $L_3$ doivent donc être calculés après évaluation de l'erreur angulaire maximum de positionnement. Cette erreur angulaire maximum ne doit provoquer qu'un déplacement de la tâche lumineuse arrivant sur le détecteur de 0,5 mm.

De même il devra être vérifié que la puissance du signal lumineux arrivant sur le détecteur se situe dans les gammes admises pour un bon fonctionnement du détecteur. Cette puissance résulte de la puissance lumineuse émise par la diode, disponible dans l'angle solide effectivement utilisé et diminuée des divers coefficient de transmission.

Ces calculs sont connus de l'homme de l'art et ne seront pas abordés ici.

La diode est une diode Siemens SFH 428-1.

Afin de travailler à énergie constante sur le détecteur et de s'affranchir des dérives en température, l'alimentation de la diode est asservie à une référence de tension nominale, et toute variation d'énergie au niveau du détecteur est compensée par l'asservissement.

En ce qui concerne la tache lumineuse, un générateur de tracé des moyens de génération d'image symbolique 10 positionne un point lumineux sur le tube. Cette source lumineuse est transmise à travers le bloc optique 20 et est réfléchie par le miroir 56 positionné sur le montant du combineur 30 vers le détecteur quatre quadrants 50. Cette tache lumineuse est positionnée en dehors du champ instantané et est suffisamment vignettée pour ne pas être vue par le pilote. Les variations de position relevées par le détecteur traduisent toutes les dérives et en fonction du résultat du test de position du combineur une correction de gain pourra être apportée.

Pour être en dehors du champs instantané de vision du pilote la position de la tache 12 a été prévue près des bords de l'écran 11 comme représenté figure 4.

Le tracé d'un point lumineux sur un tube cathodique nécessite quelques précautions afin d'éviter le marquage de ce dernier.

On considère qu'un tube a un rendement lumineux diminué de moitié lorsqu'il a reçu une charge spécifiée par le constructeur ou qui peut être mesurée.

Connaissant la durée de vie spécifiée pour le tube on peut en déduire le courant moyen maximal autorisé. En fonction de la luminance nécessaire au moment de la mesure on pourra en déduire la fréquence maximum d'exécution du test et la durée d'éclairement de la tâche 12.

Les diamètres des lentilles 41, 43, 55 et leurs distances focales seront choisis en fonction des variations de position du faisceau qu'elles reçoivent compte tenu des erreurs maximum.

En ce qui concerne les lentilles 43 et 55 dite de focalisation des faisceaux sur le détecteur 50, l'attention est attirée sur le fait que le détecteur n'est pas situé exactement au foyer de ces lentilles. Il a été vu plus haut que le détecteur devait recevoir une tâche lumineuse.

Il convient donc de faire un calcul pour évaluer la distance de défocalisation.

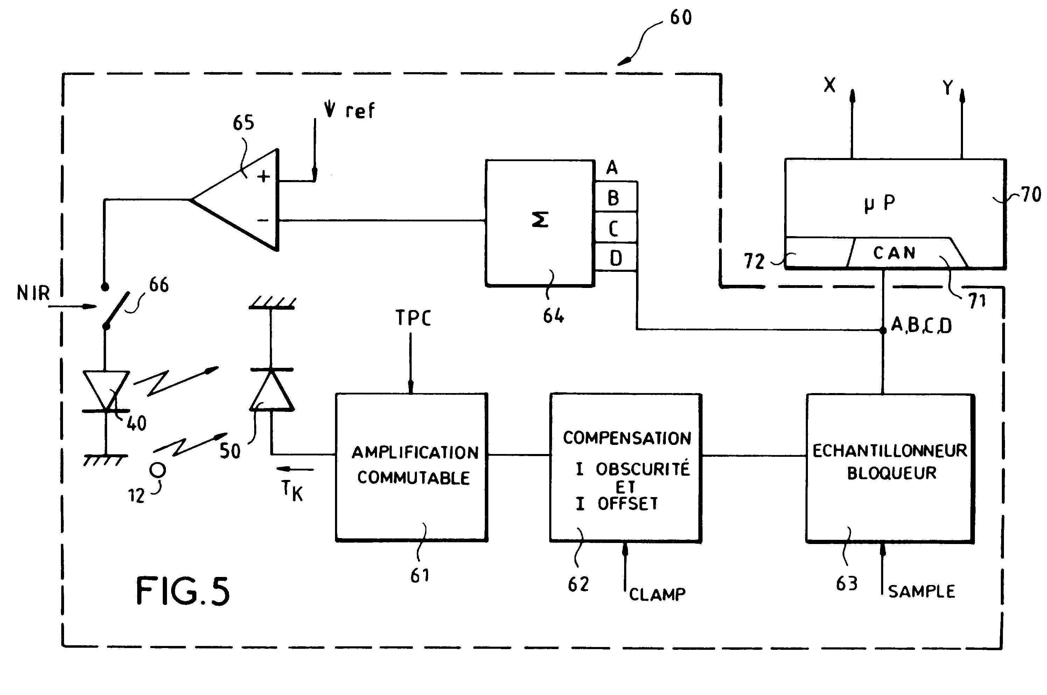

La description et le fonctionnement des circuits de traitement des signaux issus du détecteur 50 seront maintenant abordés en référence à la figure 5.

Sur cette figure le détecteur 50 a été représenté comme une diode 50 car on s'intéresse au courant du détecteur. On doit comprendre qu'en réalité il y a une source de courant par quadrant et qu'il y a donc quatre circuits identiques comportant chacun les éléments 50A, 50B, 50C, 50D correspondant à chacun des quadrants et quatre éléments 61, 62, 63, 71 dont la fonction sera décrite plus loin.

Le signal généré par le capteur 50 recevant au travers d'éléments optiques précédemment décrits la lumière de la tâche lumineuse 12, ou alternativement de la diode 40 est reçu par un pré-amplificateur en courant faible bruit et grand gain, suivi par un deuxième amplificateur permettant d'obtenir un signal de sortie d'environ 30 mV.

Ces deux éléments ont été représentés sous forme d'un bloc fonctionnel 61 d'amplification. Le gain de ce bloc d'amplification est commutable au reçu d'un signal dit TPC représenté par une flèche. Le signal TPC est généré par un séquenceur 72 inclus dans un microprocesseur 70. Les liaisons de commande n'ont pas été représentées. Le séquenceur 72 est lui-même synchronisé sur les circuits de génération d'image du bloc 10. Le changement de gain est nécessaire car l'énergie du faisceau à détecter est beaucoup plus faible (rapport de l'ordre de 10.000) pour le test chaîne complète où la source de lumière est la tache 12 que pour le test de position du combineur où la source est la diode 40. L'adaptation du gain permet malgré cette différence d'avoir les mêmes niveaux de tension en sortie de l'amplificateur. De la sorte la même chaîne de traitement de signal 60 peut être utilisée pour les deux tests.

Le signal issu de l'amplificateur 61 est diminué par un circuit 62 de compensation des courants d'obscurité et des décalages. Le courant d'obscurité est le courant créé par la lumière ambiante en l'absence de flux lumineux provenant des sources 12, 40. Avant chaque alimentation d'une source lumineuse 12 ou 40, la valeur des courants d'obscurité et des décalages de l'amplificateur 61 sont mémorisés aux bornes d'une capacité à faibles déperditions (< 70 mV/µs). Cette valeur est soustraite de la valeur en sortie du bloc d'amplification 61.

Le courant d'obscurité pourrait être négligé dans le cas du test de position du combineur où la valeur relative de ce courant est très faible (<< 0,0001). Elle ne peut être négligée dans le cas du test chaîne complète où l'on travaille à des valeurs voisine du courant d'obscurité.

La valeur des courants utiles recueillis en sortie du circuit de compensation et blocage 62 est détectée et mémorisée dans un échantillonneur/bloqueur 63. L'échantillonnage est prélevé en une seule fois au reçu d'un signal "Sample" issu du séquenceur 72. La détection est synchrone pour les quatre échantillonneurs bloqueur 63 et elle est brève (2 µs). De la sorte on s'affranchit des lumières parasites ambiantes.

Les signaux issus de l'échantillonneur bloqueur 63 sont convertis numériquement par quatre convertisseurs analogique/numérique 71 avant d'être introduits dans le microprocesseur de traitement 70. Ce microprocesseur élabore à partir des valeurs des signaux reçus, des variations de tension de déviation latérale et verticale de l'image symbolique, à apporter aux tensions existantes pour ramener l'image dans sa position centrée. Les signaux issus de l'échantillonneur bloqueur 63 sont aussi envoyés vers un sommateur 64. Ce sommateur ajoute les signaux A, B, C, D les uns aux autres. Le signal somme obtenu permet de réguler au travers d'un amplificateur différentiel 65 l'alimentation de la diode 40.

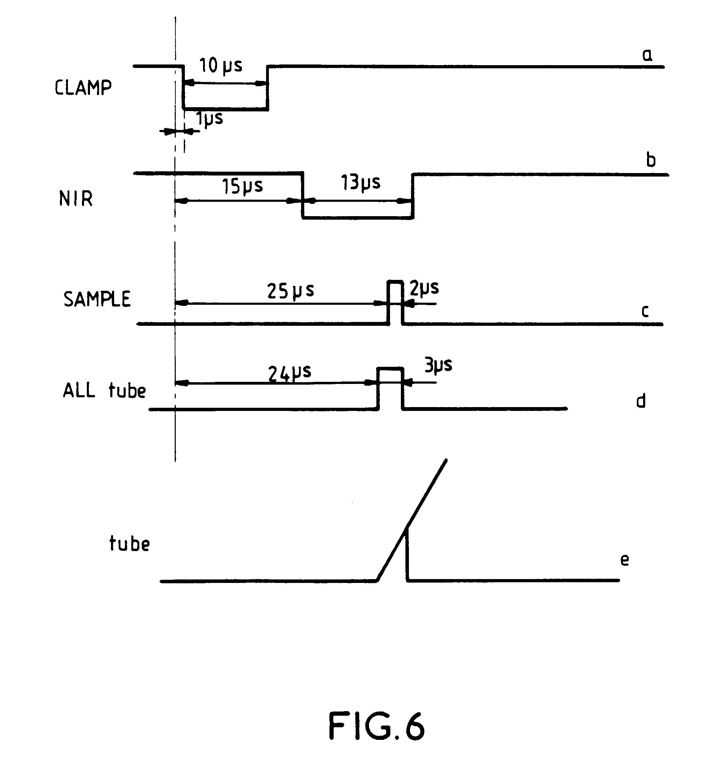

Le séquencement des signaux de mesure sera maintenant abordé en référence à la figure 6. Dans le cas de la réalisation le dispositif de test a été réalisé sous forme d'un module 100 que l'on a cherché à simplifier en utilisant les signaux de synchronisation issus de la génération d'image 10.

Il est toutefois compris que les deux tests sont effectués à la suite l'un de l'autre pendant des durées propres à chaque test et avec le même séquencement au rythme du renouvellement d'image soit 50 fois par seconde.

Le test de position globale pourra se faire par exemple pendant quelques secondes après chaque positionnement du combineur et/ou sur test déclenché, car les dérives introduites par le tube sont lentes. Le test de position du combineur se fera pendant le reste du temps soit pratiquement en permanence.

La figure 6 représente 5 lignes référencées a, b, c, d, e.

Chacune des lignes représente verticalement la valeur d'un signal, l'axe horizontal représentant le temps.

Les lignes a, b, c sont relatives aux signaux employés pour le test de position du combineur les lignes a, d, e, c sont relatives aux signaux employés pour le test de position global de l'image.

En ligne a on voit qu'après un top de synchronisation de 1 µs on mesure pendant 10 µs la charge accumulée par chacun des quatre quadrants A, B, C, D du détecteur 50.

Cette mesure est faite en l'absence de tout signal et permet d'élaborer un signal dit "clamp" représentant les décalages de l'amplificateur 61 ainsi que la résultante des courants d'obscurité.

La valeur de chacun de ces quatre signaux est mémorisée dans le circuit 62 comme expliqué plus avant. La ligne b correspond au moment d'allumage de la diode 40. Cet allumage correspond au temps de fermeture du contacteur 66 (figure 5).

Elle intervient pendant 13 µs, le début se situant 15 µs après le signal de synchronisation initial.

Le signal d'échantillonnage au niveau de l'échantillonneur 63 intervient (ligne c) 25 µs après le top initial et dure comme indiqué plus avant 2 µs.

Pour le test de position global qui est effectué avec une périodicité moindre et en remplacement d'un test de position combineur on mesure le courant d'obscurité (ligne a) l'allumage de la tache lumineuse intervient 24 µs après la synchronisation et dure 3 µs (ligne d). Cet allumage provoque une augmentation progressive de la luminance telle que représenté ligne e. Si l'on admet que le tube a une constante de temps de 3 ms pour arriver à une puissance crête de 150 mégacandelas par $M^2$, la luminance après 2 µs est d'environ 100 kilocandelas L'accroissement de luminance est représenté ligne e. La prise d'échantillon intervient 25 µs après le top initial et dure 2 µs comme précédemment (ligne c).

## Revendications

1. Dispositif de visualisation tête haute comprenant des moyens de présentation d'une image symbolique, ces moyens comportant une partie structurelle (200), des moyens de génération (10) de l'image symbolique sur une surface (11) desdits moyens de génération (10), une optique de collimation (20) de cette image et un combineur (30) recevant l'image en provenance de ladite optique de collimation (20), le dispositif comprenant en outre des moyens (100) de contrôle et de correction de la position de l'image symbolique fournie par ledit combineur, caractérisé en ce que

- les moyens de génération (10) comportent des moyens de génération d'une tache lumineuse brillante (12) en un lieu prédéterminé de ladite surface (11) sur laquelle se trouve l'image symbolique ; et en ce que les moyens de contrôle et de correction comprennent :
- des moyens optiques de focalisation (55);
- un miroir (56) structurellement lié au combineur ;
- un capteur (50) de position comportant une surface sensible délivrant un signal fonction de la position d'incidence d'un flux lumineux sur ladite surface sensible, le faisceau de lumière émis par la tache lumineuse (12) étant collimaté par ladite optique (20) de collimation de l'image symbolique et réfléchi par le miroir (56) vers le capteur de position (50) à travers les moyens optiques de focalisation (55) ;

- des moyens (60) de traitement des signaux issus du capteur ; et
- des moyens de correction (70, 71) de la position de l'image symbolique générée par lesdits moyens de génération (10) sur ladite surface (11) à partir du signal fourni par lesdits moyens de traitement.

2. Dispositif selon la revendication 1, caractérisé en ce que lesdits moyens de contrôle et de correction comportent en outre une source de lumière (40) structurellement liée à la partie structurelle (200), des moyens optiques de collimation (41) de la lumière en provenance de la source (40), un second capteur (50a) de position comportant une surface sensible répartie en plusieurs éléments (A, B, C, D), chaque élément délivrant un signal fonction d'un flux lumineux qu'il reçoit, des seconds moyens de traitement des signaux issus du second capteur (50a), des seconds moyens optiques de focalisation (43), les moyens de collimation (41) collimatant l'image de la source de lumière (40) vers le combineur (30) et les seconds moyens de focalisation (43) focalisant la lumière réfléchie par le combineur (30) vers le second capteur (50a).

3. Dispositif selon la revendication 1, caractérisé en ce qu'il comporte en outre une source de lumière (40) structurellement liée à la partie structurelle (200), des moyens optiques (41) de collimation de la lumière en provenance de la source (40), les moyens de collimation (41) collimatant l'image de la source de lumière (40) vers le combineur (30), et des seconds moyens optiques de focalisation (43) focalisant la lumière réfléchie par le combineur (30) vers ledit capteur (50), et en ce que les moyens de génération de la tache lumineuse (12) comportent des moyens générateurs de signaux de commutation (70, 72) pour commuter en séquence soit la génération de la tache lumineuse, soit une alimentation (64) de la source de lumière (40) et pour envoyer les signaux de commutation vers les moyens (60) de traitement des signaux issus du capteur (50) de position.

4. Dispositif selon la revendication 3, caractérisé en ce que les moyens (60) de traitement des signaux issus du capteur (50) de position comportent des amplificateurs (61) dont le gain est commutable sur deux valeurs, l'une utilisée lorsque la tache lumineuse (12) est générée et l'autre utilisée lorsque la source de lumière (40) est alimentée, ledit gain étant commuté en synchronisme avec lesdits signaux de commutation.

5. Dispositif selon la revendication 4, caractérisé en ce que les moyens de traitement (60) comporte un circuit (62) de mémorisation des signaux du détecteur (50) avant fonctionnement de ladite tache (12) ou de ladite source de lumière (40), pour compenser le courant d'obscurité dudit capteur (50) de position.

## Patentansprüche

1. "Head-Up"-Anzeigevorrichtung, mit Mitteln zum Präsentieren eines symbolischen Bildes, wobei diese Mittel einen Strukturabschnitt (200) enthalten, Mittel (10) zur Erzeugung des symbolischen Bildes auf einer Fläche (11) der Erzeugungsmittel (10), eine Optik (20) zur Kollimation dieses Bildes und eine Kombinationsvorrichtung (30), die das von der Kollimationsoptik (20) stammende Bild empfängt, wobei die Vorrichtung außerdem Mittel (100) zur Kontrolle und Korrektur der Position des von der Kombinationsvorrichtung gelieferten symbolischen Bildes enthält, dadurch gekennzeichnet, daß die Erzeugungsmittel (10) Mittel zur Erzeugung eines leuchtenden Lichtflecks (12) an einer vorbestimmten Stelle der Fläche (11) enthalten, auf der sich das symbolische Bild befindet, und daß die Mittel zur Kontrolle und Korrektur enthalten:

- optische Fokussierungsmittel (55),
- einen strukturell mit der Kombinationsvorrichtung verbundenen Spiegel (56),
- einen Positionssensor (50) mit einer empfindlichen Fläche, der ein Signal liefert, das von der Einfallposition eines Lichtstromes auf die empfindliche Fläche abhängt, wobei das von dem Lichtfleck (12) abgegebene Lichtbündel von der Optik (20) zur Kollimation des symbolischen Bildes kollimiert wird und von dem Spiegel (56) zum Positionssensor (50) durch die optischen Fokussierungsmittel (55) hindurch reflektiert wird,
- Mittel (60) zur Verarbeitung der von dem Sensor abgegebenen Signale, und
- Mittel (70, 71) zur Korrektur der Position des von den Erzeugungsmitteln (10) erzeugten symbolischen Bildes auf der Fläche (11) ausgehend von dem Signal, das von den Verarbeitungsmitteln geliefert wird.

2. Vorrichtung nach Anspruch 1, dadurch gekennzeichnet, daß die Kontroll- und Korrekturmittel außerdem eine Lichtquelle (40) enthalten, die strukturell mit dem Strukturabschnitt (200) verbunden ist, sowie optische Mittel (41) zur Kollimation des von der Quelle (40) stammenden Lichts, einen zweiten Positionssensor (50a), der eine empfindliche Fläche aufweist, die in mehrere Elemente (A, B, C, D) unterteilt ist, wobei jedes Element ein Signal abgibt, das von einem von ihm empfangenen Lichtstrom abhängt, zweite Mittel (60a) zum Verarbeiten der von dem zweiten Sensor (50a) abgegebenen Signale, zweite optische Fokussierungsmittel (43), wobei die Kollimationsmittel (41) das Bild der Lichtquelle (40) zur Kombinationsvorrichtung (30) kollimieren und die zweiten Fokussierungsmittel (43) das von der Kombinationsvorrichtung (30) zum zweiten Sensor (50a) reflektierte Licht fokussieren.

3. Vorrichtung nach Anspruch 1, dadurch gekennzeichnet, daß sie außerdem eine Lichtquelle (40) enthält, die strukturell mit dem Strukturabschnitt (200) verbunden ist, sowie optische Mittel (41) zur Kollimation des von der Quelle (40) stammenden Lichts, wobei die Kollimationsmittel (41) das Bild der Lichtquelle (40) zur Kombinationsvorrichtung (30) kollimieren und zweite optische Fokussierungsmittel (43) das von der Kombinationsvorrichtung (30) zum Sensor (50) reflektierte Licht fokussieren, und daß die Mittel zur Erzeugung des Lichtflecks (12) Mittel (70, 72) zur Erzeugung von Schaltsignalen enthalten, um sequentiell entweder die Erzeugung des Lichtflecks oder eine Versorgung (64) der Lichtquelle (40) zu schalten und um die Schaltsignale zu den Mitteln (60) zur Verarbeitung der von dem Positionssensor (50) abgegebenen Signale zu schicken.

4. Vorrichtung nach Anspruch 3, dadurch gekennzeichnet, daß die Mittel (60) zur Verarbeitung der von dem Positionssensor (50) abgegebenen Signale Verstärker (61) enthalten, deren Verstärkungsfaktor zwischen zwei Werten schaltbar ist, von denen einer verwendet wird, wenn der Lichtfleck (12) erzeugt wird, und der andere verwendet wird, wenn die Lichtquelle (40) versorgt wird, wobei der Verstärkungsfaktor synchron mit den Schaltsignalen geschaltet wird.

5. Vorrichtung nach Anspruch 4, dadurch gekennzeichnet, daß die Verarbeitungsmittel (60) eine Schaltung (62) zur Speicherung von Signalen des Sensors (50) vor einem Wirken des Lichtflecks (12) oder der Lichtquelle (40) enthält, um den Dunkelstrom des Positionssensors (50) zu kompensieren.

**Claims**

1. Head-up display device comprising means for presenting a symbolic image, these means including a structural part (200), means (10) for generating the symbolic image on a surface (11) of the said generating means (10), an optic (20) for the collimation of this image, and a combiner (30) which receives the image coming from the said collimation optic (20), the device furthermore comprising means (100) for controlling and correcting the position of the symbolic image delivered by the said combiner, characterized in that the generating means (10) include means for generating a bright light spot (12) at a predetermined point on the said surface (11) on which the symbolic image is to be found; and in that the control and correction means comprise:

- optical focusing means (55);
- a mirror (56) structurally connected to the combiner;
- a position sensor (50) having a sensitive surface delivering a signal which depends on the position of incidence of a light flux on the said sensitive surface, the beam of light emitted by the light spot (12) being collimated by the said optic (20) for collimating the symbolic image and reflected by the mirror (56) onto the position sensor (50) through the optical focusing means (55);
- means (60) for processing the signals output by the sensor; and
- means (70, 71) for correcting the position of the symbolic image generated by the said generating means (10) on the said surface (11) on the basis of the signal provided by the said processing means.

2. Device according to Claim 1, characterized in that the said controlling and correcting means furthermore include a light source (40) structurally connected to the structural part (200), optical means (41) for collimating the light coming from the source (40), a second position sensor (50a) having a sensitive surface distributed into several elements (A, B, C, D), each element delivering a signal which depends on a light flux which it receives, second means (60a) for processing the signals output by the second sensor (50a), second optical focusing means (43), collimation means (41) which collimate the image of the light source (40) onto the combiner (30) and second focusing means (43) which focus the light reflected by the combiner (30) onto the second sensor (50a).

3. Device according to Claim 1, characterized in that it furthermore includes a light source (40) structurally connected to the structural part (200), optical means (41) for collimation of the light coming from the source (40), the collimation means (41) collimating the image of the light source (40) onto the combiner (30) and second optical focusing means (43) which focus the light reflected by the combiner (30) onto the said sensor (50) and in that the means for generating the light spot (12) include means (70, 72) which generate switching signals in order to switch, in sequence, either the generation of the light spot or the supply (64) of the light source (40) and in order to send the switching signals to the means (60) for processing the signals output by the position sensor (50).

4. Device according to Claim 3, characterized in that the means (60) for processing the signals output by the position sensor (50) include amplifiers (61) whose gain can be switched between two values, one used when the light spot (12) is generated and the other used when the light source (40) is supplied, the said gain being switched synchronously with the said switching signals.

5. Device according to Claim 4, characterized in that the processing means (60) include a circuit (62) for storing in memory the signals from the detector (50) before operating the said spot (12) or the said light source (40), in order to compensate for the dark current of the said position sensor (50).

FIG.1

FIG.2

FIG.3

FIG.4

FIG.5

FIG.6